Europäisches Patentamt

European Patent Office

Office européen des brevets

(19)

(11) Publication number: **0 248 344**
**A2**

(12) **EUROPEAN PATENT APPLICATION**

(21) Application number: **87107713.7**

(22) Date of filing: **26.05.87**

(51) Int. Cl.³: **B 23 F 19/00**
**B 21 H 5/00**

(30) Priority: **04.06.86 JP 128054/86**

(43) Date of publication of application:
**09.12.87 Bulletin 87/50**

(84) Designated Contracting States:
**AT BE CH DE ES FR GB GR IT LI LU NL SE**

(71) Applicant: **Kabushiki Kaisha Koganei Seiki Seisakusho**
**No. 30-6, Higashikoigakubo 2-chome**
**Kokubunji-shi Tokyo(JP)**

(72) Inventor: **Hosoya, Norio**
**3-8291 Fuchu-machi**
**Fuchu-shi Tokyo(JP)**

(74) Representative: **Strehl, Schübel-Hopf, Groening, Schulz**
**Widenmayerstrasse 17 Postfach 22 03 45**
**D-8000 München 22(DE)**

(54) **Method of finishing gear tooth surfaces.**

(57) In a method of finishing tooth surfaces (22) of a workpiece gear (12) with high accuracy after gear cutting, a standard gear (13) shaped to mesh with the workpiece gear (12) is used as a tool and is brought into meshing engagement and rotated together with the workpiece gear (12). The workpiece gear (12) and the standard gear (13) are rocked relative to each other about a pivot shaft, and the tooth surfaces of these two gears make rubbing contact, so that the tooth surfaces (22) of the workpiece gear (12) can be uniformly finished with improved surface roughness and improved gear dimensions.

Fig. 1

EP 0 248 344 A2

METHOD OF FINISHING GEAR TOOTH SURFACES

FIELD OF THE INVENTION

This invention relates to a method of finishing the surface of teeth of a gear after formation of the tooth profile of the gear, so that the gear can mesh with a mating gear with improved accuracy of meshing engagement and with greatly reduced meshing noise.

BACKGROUND OF THE INVENTION

Many gears are incorporated in various machine tools, vehicles, etc. A gear is machined by a gear hobbing machine, a gear shaping machine or the like, and its tooth surface is then finished by a finishing tool such as a grinding tool.

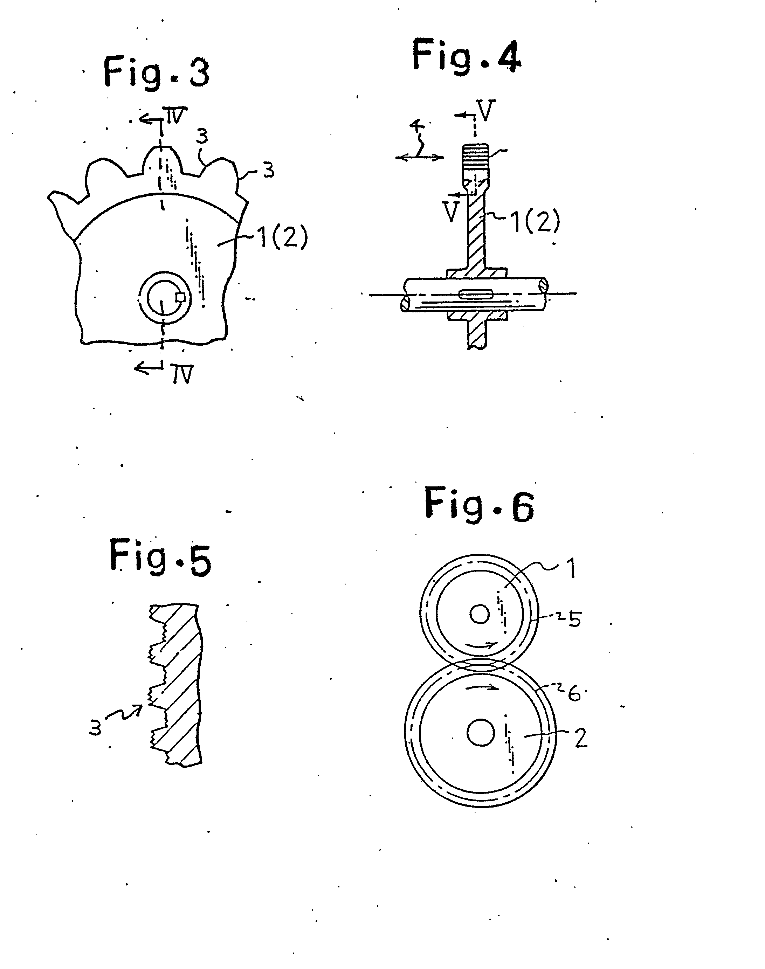

Fig.3 is a front elevation view of part of a gear, and Fig.4 is a sectional view taken along the line Ⅳ-Ⅳ in Fig.3. In finishing the tooth surfaces 3 of the gear 1 (2), a finishing tool, for example, a grinding tool is moved in a tooth trace direction (a direction substantially vertical with respect to the drawing sheet in Fig.3, that is, a direction shown by the arrow 4 in Fig.4) to finish the tooth surfaces 3 by grinding.

According to such a finishing method, errors of the shape of the gear 1 (2), such as, a pitch error and a tooth profile error can be corrected with accuracy in the order of microns. However, since the grinding tool is moved in the tooth trace direction in this finishing method, unevenness of the surface of the grinding tool remains directly on the tooth surface 3 as shown in Fig.5. Although this surface unevenness remaining on the tooth surface 3 can be decreased by smoothing the surface of the grinding tool, the grain gaps on the surface of the grinding tool will be clogged shortly into such a state that the shape of the gear 1 (2) cannot be accurately corrected. Therefore, it is difficult as a matter of fact to finish each of the tooth surfaces 3 of the gear 1 (2) into a configuration of a smooth single curve or line. Further, since the grinding tool includes generally slight dropouts in itself, and unevenness generated on one of the tooth surfaces 3 of the gear 1 (2) differs from that generated on another, it is extremely difficult to finish the individual tooth surfaces 3 into exactly the same shape. Therefore, it is the present state of the art that the tooth surfaces 3 of each tooth of the gear 1 (2) are finished into respectively different shapes. That is, the tooth surfaces 3 are not satisfactory in the relative surface roughness along their tooth surface curves (for example, involute curves) and have great non-uniformity in their final shapes.

Fig.6 shows the gears 1 and 2 meshing with each

C248344

other. As shown in Fig.6, these gears 1 and 2 rotate while making sliding frictional contact with each other except for their pitch circles 5 and 6, and there occurs always a relative slip corresponding to the difference between the length of the tooth surfaces 3. Therefore, when the gears 1 and 2 meshing with each other have uneven tooth surfaces 3, rubbing contact between these uneven tooth surfaces leads to a source of noise generation. Although meshing noise can be decreased to some extent by repeatedly finishing the gears 1 and 2, some unevenness still remains on their tooth surfaces 3, and it has been impossible to greatly decrease the noise.

BRIEF SUMMARY OF THE INVENTION

It is a primary object of the present invention to provide a gear tooth-surface finishing method which ensures uniformly and smoothly finished tooth surfaces of a gear, which can minimize unevenness of the tooth surfaces along the tooth depth, which improves the accuracy of gear design (the pitch, tooth profile, tooth trace, etc.) and which improves also the relative surfaces roughness of the tooth surfaces, thereby greatly decreasing noise attributable to meshing engagement between the gear and a mating gear.

In accordance with one aspect of the present invention directed to the above object, there is provided a gear tooth-surface finishing method comprising the steps of preparing a standard gear designed to have meshing engagement with a workpiece gear that can be driven, supporting the standard gear so as to be rockable about a pivot shaft, bringing the standard gear into meshing engagement with the workpiece gear and driving the gears, adjusting said standard gear to place said standard gear in a state of deepest possible meshing engagement with said workpiece gear as compared to a state of normal meshing engagement therebetween, causing relative rocking movement of said standard gear at a rate of at least 1,000 times per minute toward and away from said workpiece gear, and repeating the relative rocking movement of said standard gear thereby finishing the tooth surfaces of said workpiece gear by rubbing contact with those of said standard gear. In the present invention, the meshing engagement between the workpiece gear and the standard gear is combined with the rubbing contact of the tooth surfaces of the workpiece gear with those of the standard gear so as to uniformly and smoothly finish the tooth surfaces of the workpiece gear.

BRIEF DESCRIPTION OF THE DRAWINGS

Fig.1 is a plan view of part of apparatus preferably used for the practice of an embodiment of the method of the present invention.

Fig.2 is a fragmentary sectional view taken along the line II-II in Fig.1.

Fig.3 is a fragmentary front elevation view of one of gears shown in Fig.6.

Fig.4 is a sectional view taken along the line IV - IV in Fig.3.

Fig.5 is a sectional view taken along the line V - V in Fig.4.

Fig.6 is a plan view showing meshing engagement between the gears.

DETAILED DESCRIPTION OF PREFERRED EMBODIMENTS

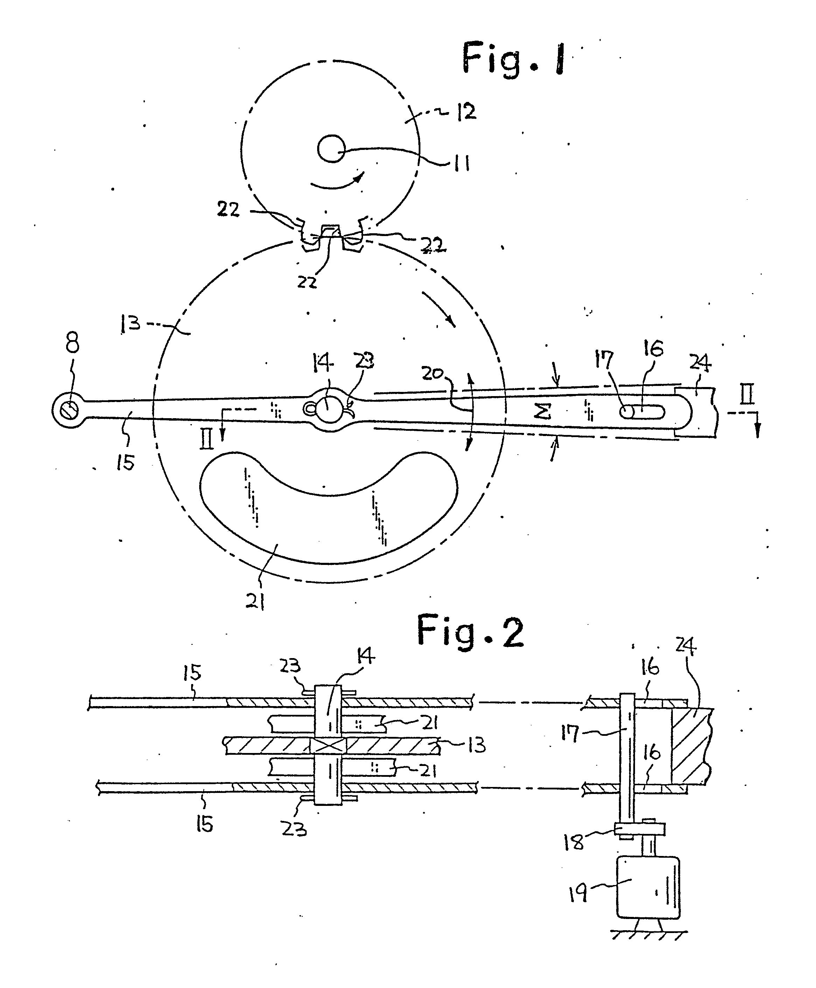

An embodiment of the method of the present invention will be described in detail with reference to Figs.1 and 2.

A cylindrical workpiece gear 12 is fixedly mounted on a drive shaft 11 driven by a prime mover (not shown) such as a drive motor or an engine. A standard gear 13 designed to make meshing engagement with the workpiece gear 12 is fixedly mounted on a mounting shaft 14 which is rotatably supported. A pivot shaft 8 is erected at a suitable position spaced from the standard gear 13, and a pair of vertically spaced rocking levers 15 are supported at one end thereof on the pivot shaft 8 so as to be rockable about the pivot shaft 8. The mounting shaft 14 extends loosely through associated portions of the rocking levers 15 with a slight clearance therebetween, and a rotary lever 17 is loosely received in aligned elongated slots 16 bored in the other end portion of the respective rocking levers 15. This rotary lever 17 is coupled to a drive motor 19 through a crank arm 18.

Thus, the drive motor 19, when energized, causes a rotating movement of the rotary lever 17 through the crank arm 18, and the rotary lever 17 causes a rocking movement of the rocking levers 15 in a directions of the arrow 20 about the pivot shaft 8. The rocking movement of the rocking levers 15 causes a rocking movement of the standard gear 13 in a direction making an angle with respect to a meshing tooth-depth direction, for example making a 30° angle of meshing tooth-depth direction.

A pair of braking members 21 are arranged to make braking contact with the front and back surfaces respectively of the standard gear 13. The contact pressure of the braking members 21 with respect to the standard gear 13 is so selected that, when the standard gear 13 rotates while making meshing engagement with the workpiece gear 12, braking force is applied in the direction of rotation of the standard gear 13.

When the workpiece gear 12 is to be finished, the standard gear 13 is preferably rocked by an amount which is selected to be from about 1/10 to 1/50 of the module, and the required number of times of rocking movement of the standard gear 13 for finishing the workpiece gear 12 is preferably selected to be from about ten to thirty times as large as the number of revolutions of the workpiece gear 12. Further, the meshing engagement between the standard gear 13 and the workpiece gear 12 is preferably so selected that, at the end of the rocking movement of the standard gear 13 toward the workpiece gear 12, the standard gear 13 is preferably in a state of deepest possible meshing engagement with the workpiece gear 12 relative to a state of normal meshing engagement therebetween.

In the embodiment described above, the workpiece gear 12 may be shifted in the direction of its rotary axis or the mounting shaft 14 may be suitably turned so as to deal with a case where the workpiece gear 12 is a gear having crowning, or a bevel gear, a helical gear or the like. Further, the standard gear 13 may have a modifying tooth profile besides a theoretically accurate tooth profile and may also be a gear having a shape other than the cylindrical shape, such as a rack or an oval gear. Also, the workpiece gear 12 may be a gear having a shape other than the cylindrical shape, such as a rack, an oval gear or an internal gear. Further, the braking members 21 may be eliminated, the mounting shaft 14 may be arranged to be rotated, and the drive shaft 11 and the mounting shaft 14 may be placed under synchronous control, so that the desired braking force can be applied to the standard gear 13, without the provision of the braking members 21.

The standard gear 13 is prepared by cutting a gear member from a plate of a sintered hard alloy by means of electrospark machining of wirecut and then accurately finishing the teeth of the gear member, or by electrodepositing diamond or CBN (cubic boron nitride) onto a basic gear member of a special tool steel material, or by further coating TiC or TiN on the gear member of the tool steel having the electrodeposited diamond or CBN.

In Figs.1 and 2, reference numerals 22,23 and 24 designate tooth surfaces of the workpiece gear 12, escapement preventive pins, and a guide for the rocking levers 15, respectively.

The gear tooth-surface finishing method of the present invention will now be described in detail. The standard gear 13 is brought into meshing engagement with the workpiece gear 12, and, while supplying a working liquid between these two gears 12 and 13, the drive shaft 11 is rotated to rotate the workpiece gear 12 at a rotation speed of, for example, 100 revolution per minute.

The standard gear 13 meshing with the workpiece gear 12 is rotated while the braking members 21 are applying the braking force to the standard gear 13. In the meantime, the rotary lever 17 turns in the slots 16 by being driven from the drive motor 19, thereby causing the rocking movement of the rocking levers 15 in the direction of the arrow 20 about the pivot shaft 8. With the rocking movement of the rocking levers 15, the standard gear 13 rocks (1,000 to 3,000 times per minute) deep and away from its position of normal meshing engagement with the workpiece gear 12. Thus, from the beginning to the end of the meshing engagement between the standard gear 13 and the workpiece gear 12, the standard gear 13 makes continuous rubbing contact in a direction as shown by the arrow 20 (in a direction making an angle with respect to a tooth-depth direction) with the mating tooth surfaces 22 of the workpiece gear 12 to burnish or scrape off any convex portions of the tooth surfaces 22 of the workpiece gear 12. Further, the rocking movement of the standard gear 13 in the direction of the arrow 20 would not give rise to local wear or cracking of the tooth surfaces 22 of the workpiece gear 12. After completion of finishing one of the tooth surfaces 22 of each of the teeth of the workpiece gear 12 in the manner described above, the workpiece gear 12 is removed from the shaft 11 and, after being turned over, mounted on the shaft 11 again, and the manner of finishing processing similar to that described above is carried out to finish the other of the tooth surfaces 22 of each of the teeth of the workpiece gear 12. In lieu of turning over the workpiece gear 12, the workpiece gear 12 may be rotated in the opposite direction.

By the finishing processing described above, the tooth surfaces 22 of the workpiece gear 12 can be entirely uniformly finished. Also, since the tooth surfaces 22 of the workpiece gear 12 are finished by the associated teeth of the standard gear 13 in the tooth-depth direction (the radial direction of the workpiece gear 12), no surface unevenness occurs in the face-width direction (the axial direction of the workpiece gear 12), and the tooth surfaces 22 are entirely smoothly finished. Further, a certain degree of frictional resistance is imparted to the standard gear 13 by the braking members 21; all the meshed surfaces of the standard gear 13 and workpiece gear 12 make rubbing contact with each other without any backlash between their teeth, so that the tooth surfaces 22 of the workpiece gear 12 can be uniformly and smoothly finished.

A pitch test was conducted on a gear finished according to the method of the present invention and also on a gear finished by grinding only. In this pitch test, the reading on the scale of a measuring instrument applied to a point of a first tooth of each of the gears is taken as zero, and, while successively rotating the gear from the position of the first tooth, the reading at the same point of each of the succeeding teeth is observed up to the 23rd tooth. Then, on the basis of the data obtained, an adjacent pitch error, a single pitch error and an accumulative pitch error are calculated for each of the gears. Table 1 shows the data of the gear finished according to the method of the present invention, while Table 2 shows the data of the gear finished by grinding only.

Table 1

| TOOTH NO. | READING | ADJAC. | SINGLE | ACCUM. |
|---|---|---|---|---|
| 1 | 0.0 | 1.2 | -0.1 | -0.1 |
| 2 | -1.2 | 0.4 | -1.3 | -1.4 |
| 3 | -0.3 | 0.1 | -0.9 | -2.3 |
| 4 | -0.9 | 0.6 | -1.0 | -3.3 |
| 5 | -0.3 | 0.6 | -0.4 | -3.7 |
| 6 | 0.3 | 0.5 | 0.2 | -3.5 |
| 7 | -0.2 | 0.2 | -0.3 | -3.8 |
| 8 | 0.0 | 0.4 | -0.1 | -3.9 |
| 9 | -0.4 | 3.0 | -0.5 | -4.4 |
| 10 | 2.5 | 1.3 | 2.5 | -1.9 |
| 11 | 1.3 | 0.7 | 1.2 | -0.7 |
| 12 | 0.6 | 1.5 | 0.5 | -0.3 |
| 13 | 2.1 | 1.9 | 2.0 | 1.6 |
| 14 | 0.2 | 2.1 | 0.1 | 1.7 |
| 15 | 2.3 | 0.4 | 2.2 | 3.9 |
| 16 | 2.7 | 1.8 | 2.6 | 6.5 |
| 17 | 0.9 | 1.2 | 0.8 | 7.3 |
| 18 | -0.3 | 0.6 | -0.4 | 6.9 |
| 19 | -0.9 | 0.4 | -1.0 | 5.9 |
| 20 | -0.5 | 1.8 | -0.6 | 5.3 |
| 21 | -2.3 | 2.3 | -2.4 | 2.9 |
| 22 | 0.0 | 2.7 | -0.1 | 2.8 |
| 23 | -2.7 | 2.7 | -2.8 | 0.0 |
| | MAX. | 3.0 | 2.8 | 11.7 |

Table 2

| TOOTH NO. | READING | ADJAC. | SINGLE | ACCUM. |
|---|---|---|---|---|
| 1 | 0.0 | 1.0 | 0.8 | 0.7 |
| 2 | -1.0 | 0.2 | -0.2 | 0.5 |
| 3 | -0.8 | 0.3 | 0.0 | 0.4 |
| 4 | -1.1 | 1.0 | -0.3 | 0.1 |
| 5 | -2.1 | 2.1 | -1.3 | -1.2 |
| 6 | 0.0 | 1.4 | 0.8 | -0.4 |
| 7 | -1.4 | 0.1 | -0.6 | -1.1 |
| 8 | -1.5 | 0.4 | -0.7 | -1.8 |
| 9 | -1.1 | 0.2 | -0.3 | -2.8 |
| 10 | -1.3 | 0.9 | -0.5 | -2.7 |
| 11 | -0.4 | 0.8 | 0.4 | -2.4 |
| 12 | -0.7 | 0.5 | 0.1 | -2.8 |
| 13 | -1.2 | 0.4 | -0.4 | -2.8 |
| 14 | -0.8 | 0.5 | 0.0 | -2.8 |
| 15 | -0.3 | 1.0 | 0.5 | -2.4 |
| 16 | 0.7 | 1.4 | 1.5 | -0.9 |
| 17 | -0.7 | 1.2 | 0.1 | -0.9 |
| 18 | 0.5 | 1.8 | 1.3 | 0.8 |
| 19 | -1.3 | 0.2 | -0.5 | -0.8 |
| 20 | -1.1 | 0.5 | -0.3 | -0.5 |
| 21 | -0.6 | 1.0 | 0.2 | -1.4 |
| 22 | -1.6 | 2.1 | -0.8 | -1.2 |
| 23 | 0.5 | 0.5 | 1.3 | 0.0 |
|  | MAX. | 2.1 | 1.5 | 3.5 |

It will be seen in Tables 1 and 2 that the values of the adjacent pitch error, single pitch error and accumulative pitch error detected after the process of finishing decrease greatly from those detected before the process of finishing, as shown in Table 3.

Table 3

|  | Before Finishing (Table 1.) | After Finishing (Tabe 2) |
|---|---|---|
| Adjacent pitch error | Max 3.0 $\mu m$ | Max 2.1 $\mu m$ |
| Single pitch error | Max 2.8 $\mu m$ | Max 1.5 $\mu m$ |
| Accumulative pitch error | Max 11.7 $\mu m$ | Max 3.5 $\mu m$ |

Further, a tooth profile error (an error in the tooth-depth direction) and a tooth trace error (an error in the tooth-trace direction) of a gear were measured at four points respectively before and after the gear was finished according to the method of the present invention. According to the results of measurement, the tooth profile error decreased from a maximum of 12 $\mu m$ to a maximum of 11 $\mu m$, and the tooth trace error decreased from a maximum of 10 $\mu m$ to a maximum of 5 $\mu m$. Further, when the surface roughness of the above gear was measured at five tooth surfaces before and after the gear was finished by the method of the present invention, the surface roughness decreased from a maximum of 2.5 $\mu m$ to a maximum of 1.5 $\mu m$. Further, when meshing noise was measured in an anechoic room before and after the gear was finished by the method of the present invention, the sound pressure at 8,000Hz

decreased from 42db to 35db.

It will be understood from the foregoing description of an embodiment of the method of the present invention that a standard gear of very hard material disposed in meshing engagement with a workpiece gear is rocked toward and away from the workpiece gear to finish the tooth surfaces of the workpiece gear by rubbing contact with those surfaces. Therefore, the tooth surfaces of the workpiece gear can be uniformly and smoothly finished, and surface unevenness along the tooth depth can be minimized. Also, the tooth profile of the workpiece gear can be corrected simultaneously with the finishing of the tooth surfaces. Thus, the gear finished by the method of the present invention has a tooth profile very close to an ideal one and has minimized unevenness of the tooth surfaces. Therefore, when the gear is incorporated in a machine tool or an automobile, it meshes smoothly with a mating gear with greatly decreased meshing noise, that is, without generating offensive meshing noise under rotation. Further, means of merely very simple structure are required for putting the method of the present invention into practice, and such means can be easily handled by anyone without giving rise to trouble during the process of gear finishing. Thus, experience and skill of the operator are not required at all for finishing gears, and gears can now be finished by simple manipulation.

In the embodiment described above, mechanical rocking drive means such as a cam, an oil hydraulic cylinder or a pneumatic cylinder may be used for causing the rocking movement of the standard gear relative to the workpiece gear. Further, ultrasonic or electrical rocking drive means may also be used to cause the rocking movement of the standard gear relative to the workpiece gear.

CLAIMS:

1. A gear tooth-surface finishing method comprising

bringing a standard gear (13) having tooth surfaces harder than tooth surfaces of a workpiece gear (12) into meshing engagement with the latter while supporting both gears (12, 13) so as to be rockable relative to each other about a pivot shaft (8),

rotatably driving one of said gears (12, 13),

adjusting said standard gear (13) to place its teeth in a state of deepest possible meshing engagement with said workpiece gear teeth as compared to a state of normal meshing engagement therebetween,

causing relative rocking movement of said standard gear (13) at a rate of at least 1,000 times per minute toward and away from said workpiece gear (12), and

repeating the relative rocking movement of said standard gear (13) thereby finishing the tooth surfaces (22) of said workpiece gear (12) by rubbing contact with those of said standard gear (13).

2. The method of claim 1, wherein said workpiece gear (12) and said standard gear (13) are synchronously controlled to be driven at a predetermined ratio therebetween.

3. The method of claim 1 or 2, wherein said workpiece gear (12) and/or said standard gear (13) are non-cylindrical gears.

4.  The method of claim 3, wherein said workpiece gear (12) and said standard gear (13) are bevel gears.

5.  The method of any of claims 1 to 4, wherein said workpiece gear (12) is an internal gear.

6.  The method of any of claims 1 to 5, wherein said standard gear (13) is made of a hard material.

7.  The method of any of claims 1 to 6, wherein said standard gear (13) is covered by a coating of a hard material.

8.  The method of any of claims 1 to 7, wherein said workpiece gear (12) is supported for making rocking movement about said pivot shaft (8).

9.  The method of any of claims 1 to 7, wherein said standard gear (13) is supported for making rocking movement about said pivot shaft (8).

10. The method of any of claims 1 to 9, wherein two or more workpiece gears are meshed with two or more standard gears respectively to finish said workpiece gears.

## Fig. 1

## Fig. 2

Fig.3

Fig.4

Fig.5

Fig.6